Europäisches Patentamt

European Patent Office

Office européen des brevets

(11) Publication number: **0 220 854**
**A1**

## (12) EUROPEAN PATENT APPLICATION

(21) Application number: **86307645.1**

(22) Date of filing: **03.10.86**

(51) Int. Cl.⁴ **B60G 11/08 , B60G 15/06 , B60G 11/34 , F16F 1/36**

(30) Priority: **11.10.85 GB 8525123**
**22.04.86 GB 8609814**
**01.08.86 GB 8618866**

(43) Date of publication of application:
**06.05.87 Bulletin 87/19**

(84) Designated Contracting States:
**ES**

(71) Applicant: **GKN TECHNOLOGY LIMITED**
**Birmingham New Road**
**Wolverhampton West Midlands WV4**
**6BWs(GB)**

(72) Inventor: **Tucker-Peake, Adrian**
**Beggars Roost 17 Lancaster Avenue**
**Rubery Birmingham B45 9YQ(GB)**
Inventor: **Rowlands, Geoffrey**
**116 High Street Chasetown**
**Walsall West Midlands WS7 8XG(GB)**

(74) Representative: **Dodd, Graham Marshall et al**
**Guest Keen and Nettlefolds plc Group**
**Patents and Licensing Department P.O. Box**
**55 Ipsley House Ipsley Church Lane**
**Redditch Worcestershire B98 0TL(GB)**

(54) Vehicle suspension.

(57) A suspension, particularly for the rear wheels of a motor vehicle, comprising two leaf springs 12, 13 extending transversely of the vehicle generally parallel to one another and spaced longitudinally of the vehicle, and a wheel carrier 20 at each side of the vehicle connected to adjacent ends of the springs. The springs are supported on the vehicle structure, e.g. on a sub-frame 10, at two spaced positions between their ends so as to resist roll of the vehicle, while the wheel carriers are further connected to the vehicle structure by telescopic damper units 21, 22. The suspension provides good control of wheel movement while being relatively simple and readily accommodated in a vehicle.

FIG.1

## VEHICLE SUSPENSION

This invention relates to a vehicle suspension. Suspensions according to the invention have been developed primarily to be used for the rear, unsteerable, wheels of a front wheel drive vehicle such as a passenger car, but it is to be understood that the invention is applicable to the wheels of other vehicles, and possibly for wheels which are steerable.

Suspensions have been proposed which include a leaf spring or springs extending transversely of the vehicle, having its or their ends connected to parts which carry wheel and hub assemblies. It has been proposed that such a spring or springs may partake in the function of determining the path of wheel travel relative to the structure of the vehicle, to enable one or more arms, links or the like to be eliminated. However, in such suspensions as proposed hitherto there have been disadvantages in that the path of wheel travel has not been sufficiently well constrained, which has disadvantages in terms of the handling characteristics of the vehicle. Further, designs have been proposed which are relatively bulky and not easy to accommodate in modern vehicles where space is limited.

Accordingly, it is the principal object of the present invention to provide a suspension wherein these disadvantages are overcome or reduced. Further features and advantages of the invention will be pointed out hereafter.

According to the invention, we provide a suspension for a pair of wheels of a vehicle, comprising two leaf springs extending transversely of the vehicle generally parallel to one another and spaced from one another longitudinally of the vehicle, means supporting the springs relative to the vehicle structure at two positions spaced between the ends of the springs, for generally pivotal movement about axes extending transversely of the springs (i.e. longitudinally of the vehicle), and a wheel carrier member at each side of the vehicle, connected to adjacent ends of the springs.

In a suspension according to the invention, the springs, in addition to providing springing for the wheels, take part in determining the path of travel of the wheel carrier members relative to the vehicle structure. By virtue of being spaced from one another longitudinally of the vehicle, the springs provide good control of tracking of the wheels carried by the wheel carrier members. In addition, by virtue of their support relative to the vehicle structure at two positions spaced between the ends of the springs, the springs resist roll of the vehicle so that additional components such as anti-roll bars are unnecessary.

Preferably the leaf springs are made of composite, fibre-reinforced plastics, material. The structure of such springs can be determined such that they have an ability resiliently to deflect laterally so that the wheel carrier members are supported with a compliance (i.e. an ability to deflect slightly) in the direction longitudinally of the vehicle. This provides a bump softening effect. At the same time, however, the use of the spaced springs ensures that wheel alignment remains well controlled even under such conditions.

Each wheel carrier member is preferably further connected to the vehicle structure by a respective generally vertically disposed telescopic damper unit. Each wheel carrier member may be rigidly connected to a part of its associated damper unit, and be connected to the ends of the springs for pivotal movement about an axis or axes extending generally longitudinally of the vehicle.

With such an arrangement of damper unit, in addition to the springs, the path of wheel movement is completely determined without requiring any additional links. As compared with a conventional suspension utilising a damper unit also provided with a spring, the damper unit in a suspension according to the invention occupies relatively little space, and therefore does not intrude so much into the passenger or load carrying space of the vehicle. Such a damper unit may also, in known manner, incorporate means for levelling the vehicle by causing the suspension to assume a predetermined static position irrespective of load.

The suspension may further comprise a sub-frame connected to the vehicle structure and extending transversely thereof, having mountings for supporting the springs relative to the sub-frame and thus relative to the vehicle structure.

The provision of a sub-frame is advantageous in that it enables the suspension to be provided with the sub-frame as a complete assembly which can readily be fitted to a vehicle by the vehicle manufacturer. Further, the sub-frame may be arranged to be connected to the structure of the vehicle by mountings which resist the transmission of noise and vibration to the vehicle structure.

The sub-frame may be of generally U-shaped configuration, having upwardly extending portions at each side of the vehicle which provide top mountings for the damper units. Such a sub-frame is readily accommodated in a vehicle structure.

The sub-frame may afford a recess in which the springs are disposed. By being thus disposed, and possibly even within an enclosure formed by the sub-frame, the springs are protected from road hazards.

A further feature of the invention is concerned with the means by which the springs are positioned in the direction transversely of the vehicle, to be able to resist forces imposed on the springs in the direction of their length when the vehicle is cornering and under other conditions in use. In the suspension as thus far described, the spaced mountings of the springs to the vehicle structure by way of the sub-frame, which mountings usually will comprise suitable elastomeric bushes, have to withstand such forces.

The invention therefore provides that there may be at least one resilient element extending generally parallel to the springs, and connected on the one hand to the springs between their support positions and on the other hand to the vehicle structure, to resist movement of the springs along their length while permitting bending thereof. Such a resilient element, which may be of composite material or of spring steel, relieves the spring mountings of lateral forces while permitting bending of the springs between their mountings.

There may be resilient means arranged to act between the vehicle structure and the springs between their support positions, in the direction in which the springs principally deflect in use. This enables adjustment of the spring rates in jounce and/or rebound, without, theoretically, affecting their roll rates.

A further aspect of the invention is concerned with providing the suspension with a variable rate, i.e. a variation in the force required to produce a given deflection of a wheel of the vehicle. In particular, the rate may be required to rise with increasing wheel deflection in jounce. Such a characteristic is not obtainable when springing is provided by a simple leaf spring or springs, and the use of complex mechanical linkages to obtain a rise in rate as a result of geometrical changes with wheel movement is undesirable.

To provide for a change in spring rate, the suspension may be provided with a leaf spring portion connected to each wheel carrier member and arranged, during an initial part of jounce movement thereof, to exert a force opposing that exerted by at least one of said springs, and during a further part of such movement to pass through a neutral position and thereafter to exert a force augmenting that exert by said at least one spring. The manner in which this provision affords the change in spring rate is more fully described hereafter.

There may be an additional leaf spring extending transversely of the vehicle, having its opposite end portions constituting said leaf spring portions and connected to the wheel carrier members.

The invention will now be described by way of example with reference to the accompanying drawings, of which:-

Figure I is a diagrammatic perspective view, partially broken away for clarity, of a suspension according to the invention;

Figure 2 shows diagrammatically how the suspension would be incorporated in a typical motor vehicle, namely for the rear wheels of a passenger car;

Figure 3 is a diagrammatic perspective view of a suspension according to the invention incorporating a modification;

Figure 4 is a diagrammatic view of the mode of operation of yet a further modification of a suspension according to the invention;

Figure 5 is a diagrammatic perspective view of a suspension incorporating the modification of Figure 4.

Referring firstly to Figure I of the drawings, there is shown a suspension for a pair of wheels of a motor vehicle. In this example, the suspension is for the rear wheels of a relatively light vehicle such as a passenger car. The suspension comprises a sub-frame I0 which is generally of U-shape, extending transversely of the vehicle and having upwardly extending portions II at each side of the vehicle. The sub-frame I0 is a metal pressing or a fabrication from metal pressings and is in the form of a shallow trough whose open face is at the bottom of the part of the sub-frame which extends transversely of the vehicle and the outer sides of the upwardly extending parts II of the sub-frame.

Two leaf springs I2, I3 are disposed within the recess or trough defined by part I0 of the sub-frame. The springs extend transversely of the vehicle parallel to one another, and spaced from one another longitudinally of the vehicle. Spring I2 is supported relative to the sub-frame by two mounting assemblies I4, I5 which comprise elastomeric bushes held in sheet metal supports secured to the sub-frame by being bolted thereto. Such mountings each provide for pivotal movement of the spring through a small angle, about a respective axis extending transversely of the spring, i.e. longitudinally of the vehicle. Spring I3 is similarly supported by two mounting assemblies one of which is indicated at I6, such mounting assemblies being in line with those for the spring I2.

The springs I2, I3 are preferably of composite, fibre-reinforced plastics, material. They may be of uniform cross-sectional shape and area throughout their length, or may be non-uniform. For example, they may taper to become thinner between their positions at which they are supported relative to the sub-frame, so that in use the majority of resilient bending of the spring occurs in such region rather than in the portions of the springs outboard thereof. The springs need not be identical to one another, but it is preferable that they are identical so that the number of different parts required in the suspension is minimised.

The adjacent free ends of springs 12, 13 are provided with eye end fittings 17, 18 which may be of the type disclosed in our International Patent Application Publication No. WO85/00643, to which reference should be made for a more detailed description of these parts. Bushes, e.g. of the resilient metal-rubber-metal type, held to the spring receive a bolt 19 to secure a wheel carrier member 20 to the spring, and provide for relative pivotal movement between the wheel carrier member and spring about the axis of the bolt 19. The wheel carrier member 20 is rigidly secured to a lower part 21 of a telescopic damper strut, whose upper part 22 is fixed, by a resilient mounting, to the top of the associated sub-frame part 11.

The wheel carrier member 20 supports a conventional assembly of stub-axle, bearings, and wheel hub, for rotation of the wheel about an axis 23.

The wheel, indicated as 24, at the opposite side of the vehicle is similarly supported by a mirror-image identical arrangement of wheel carrier member and telescopic damper.

In use, vertical movement of the wheel carrier members relative to the sub-frame and hence the vehicle structure causes bending of the springs 12, 13. Such movement is damped by the respective telescopic damper struts. The mounting of each spring 12, 13 to the sub-frame at the two positions spaced lengthwise of the spring means that the springs resist roll of the vehicle, in generally known manner. The configuration of the springs, however, is such that the wheel carriers are held in a well controlled alignment relative to the vehicle structure, preferably eliminating the need for any additional tie rods or the like connecting the wheel carriers to the vehicle structure, although it would not be outside the scope of the invention if such components were provided. However, limited displacement of the wheel carrier members longitudinally of the vehicle is possible by lateral bending of the free end portions of the springs 12, 13 to provide a bump softening effect dependent upon the bending stiffness of the springs in their lateral directions. The configuration of the springs, however, is such that wheel alignment remains well controlled even under such conditions.

Referring now to Figure 2 of the drawings, this shows, in a diagrammatic side view, how the suspension may be incorporated in a vehicle. In this drawing, the rear part of a passenger car is diagrammatically shown, with a wheel arch structure 25 providing clearance for a wheel 26. The floor pan structure of the car is indicated at 27, and it will be noted that the part 10 of the sub-frame extends transversely of the vehicle therebeneath in the rear seats/luggage-boot area of the car. The respective portion 11 of the sub-frame, containing damper 21, 22 and wheel carrier 20 (not shown in Figure 2), is readily accommodated in the wheel arch structure.

The invention thus provides a suspension which uses relatively few parts and is easily accommodated in a typical vehicle structure. The suspension is advantageous when applied to the rear wheels of a vehicle, but it may nevertheless be possible for the wheel carrier members to provide for some steering swiveling movement of the wheels.

The springs 12, 13 are protected by virtue of being disposed within the trough afforded by the sub-frame. The trough may be closed by a lower cover member, so that the greatest part of the length of the springs, and in particular their mountings, occupy an enclosure so as to be better protected from road dirt and grit, stone chippings and other hazards which could otherwise damage the springs.

In possible modifications of the invention, instead of the springs 12, 13 being completely separate, it would be possible for them to be connected in their centre regions to form an integral structure of composite material. The mounting assemblies as 14, 15 for the springs may have a stiffness in directions transversely of the vehicle (longitudinally of the springs) controlled such that under cornering conditions a change in wheel attitude occurs to give the vehicle desirable handling characteristics, e.g. to control an understeer condition.

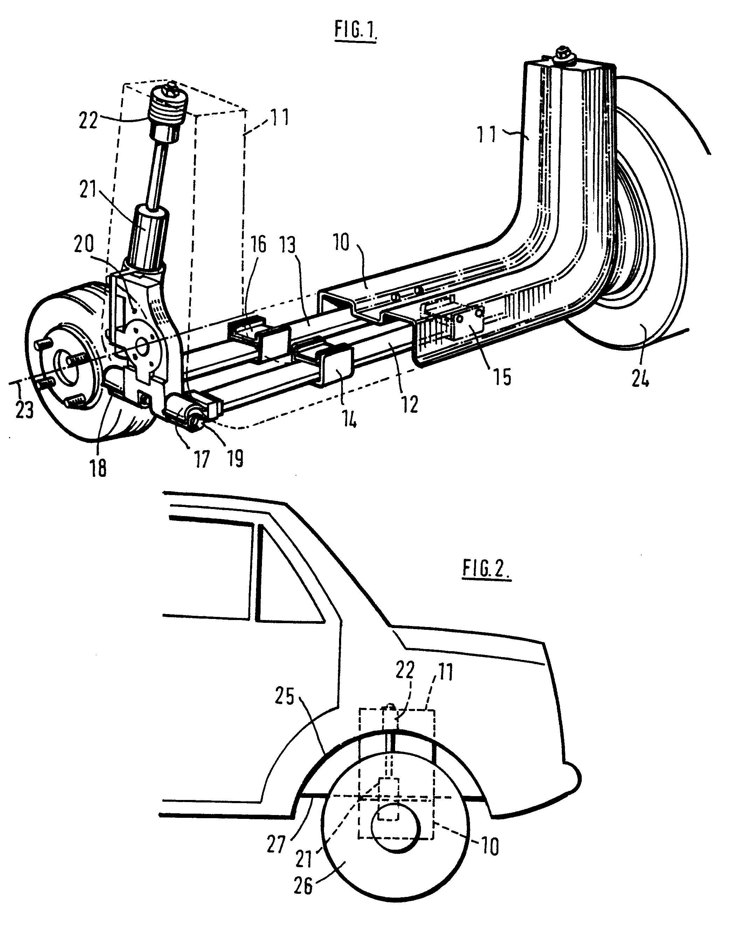

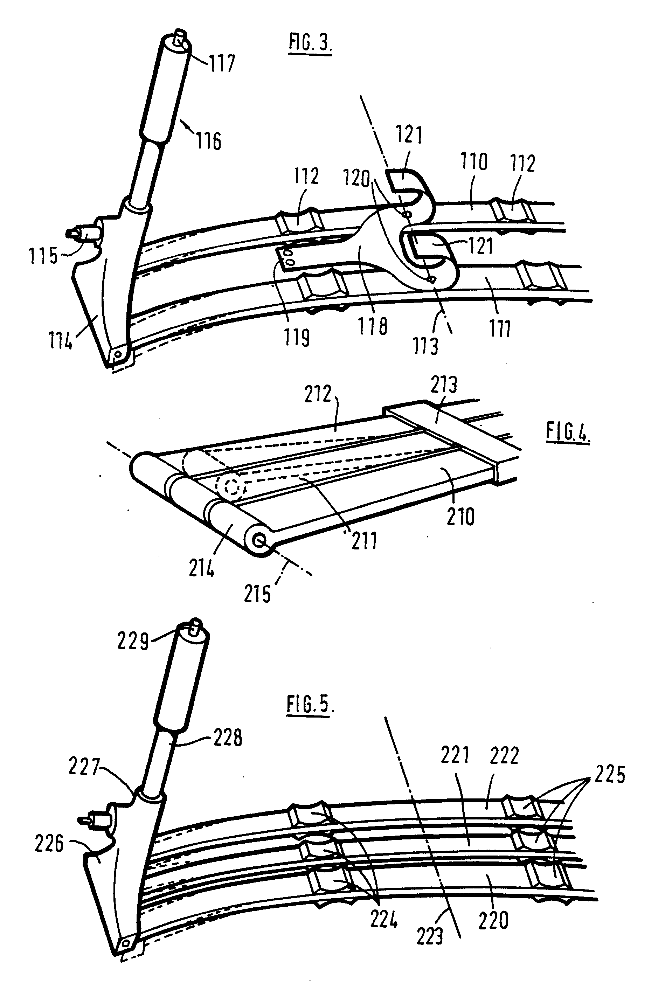

Referring now to Figure 3 of the drawings, there is shown diagrammatically a modification of the suspension according to the invention, which seeks to overcome the problem of loads applied to the springs along their length as a result of forces arising transversely of the vehicle during cornering. It will be appreciated that in the arrangement of Figure 1 the springs depend upon their mountings 14, 15, 16 to prevent their moving under such forces.

In the suspension of Figure 3, the sub-frame 10, 11 has been omitted for clarity. The suspension comprises two leaf springs 110, 111 extending transversely of the vehicle and spaced from one another longitudinally of the vehicle, the springs being supported by assemblies including elastomeric bushes indicated as 112. These provide for limited pivotal movement of the springs about axes extending transversely thereof, i.e. longitudinally of the vehicle parallel to the longitudinal centre line of the vehicle which is indicated at 113.

At one side of the vehicle, the wheel carrier member pivotally connected to the ends of the springs is indicated at 114, and a stub-axle 115 thereon is shown diagrammatically at 115. A telescopic damper is indicated at 116, with a top mounting 117.

The springs 110, 111 are further connected to the sub-frame by a locating element 118. This is of resilient material, e.g. spring steel or a fibre-reinforced plastics material, and in the embodiment illustrated is of generally Y-shape in plan view with its two limbs connected to the springs 110, 111 at 120 (at the vehicle centre line 113), and its single opposite limb connected to the sub-frame at 119.

The element 118 thus maintains the springs 100, 111 in the desired position transversely of the vehicle, under cornering forces. The bushes 112 are largely relieved of having to withstand such forces. At the same time, however, the resilient element 118 does not hinder to any substantial extent vertical movement of the centre part of the springs. The amount of movement vertically of the centre of the springs relative to the sub-frame is comparatively small when the vehicle's wheels deflect in jounce and rebound alone, and theoretically is zero for roll deflections, and hence the connection of the centres of the springs to the sub-frame by way of element 118 does not impose unacceptable transverse movements on the springs.

In the embodiment of Figure 3, the ends of the parallel limbs of the element 118 have been shaped to a reflex form at 121, where they may abut a suitable part of the sub-frame. Thus they provide a spring force acting downwardly on the centres of the springs. This lowers the rate of the suspension for wheel deflections in jounce, without altering the rate for roll deflection. Springs which are relatively stiff may thus be used to achieve a high roll rate without leading to a high rate in jounce.

In place of the single Y-shaped element 118 above described, individual transverse resilient elements may be provided to connect the springs to the sub-frame. As is generally known, the greater the length of such an element or elements, the smaller is the movement transversely of the vehicle which it imposes on the spring as it is deflected.

It would be possible to provide separate resilient elements, e.g. rubber blocks or the like, to abut the springs to effect a change in spring rate for jounce and/or rebound deflections. Such elements may be engaged only after some deflection of the springs, so that for initial movement the rate is that of the springs themselves and subsequently is determined by the characteristics of the resilient elements in addition to those of the springs.

Referring now to Figure 4 of the drawings, there is shown diagrammatically part of an arrangement by which a suspension according to the invention may be made to provide a dual rate. There is shown an assembly comprising three leaf spring portions 210, 211, 212, held together, at a position spaced from their ends by a fastening 213. The free ends of the leaf spring portions are provided with eye end fittings (as indicated at 214 for the spring

210) for receiving a fixing pin extending along axis 215. The spring assembly is intended to provide a spring force acting in a downwards direction, with reference to the drawing, at the free ends of the leaf springs.

Springs 210, 212 are of substantially the same shape as one another when unstressed, and this shape will be assumed to be that shown in the drawing. Spring 211, however, is of a different shape when unstressed such that its end part would assume a higher position than the ends of the springs 210, 212. The free position of the spring 211 is shown in broken lines in Figure 4 of the drawings. Therefore, when the eyes of the free ends of the springs are held in alignment with one another by the pin passing therethrough, spring 211 exerts a force which opposes that exerted by the springs 210, 212. As the assembly of the free ends of the springs is deflected upwardly relative to the fastening 213, during an initial part of such deflection the rate of the assembly of springs will be equal to that of the springs 210, 212 less that of the spring 211. With increasing such deflection, spring 211 will pass through the position it occupies when unstressed and thereafter the rate of the assembly will be equal to that of the springs 210, 212 plus that of spring 211. An increase in rate is thus obtained as deflection goes past the neutral position of spring 211.

Referring now to Figure 5 of the drawings, this shows how the principle may be applied to a vehicle suspension according to the invention. In Figure 5, the sub-frame has been omitted for clarity, and the suspension comprises three leaf springs 220, 221, 222 extending transversely of the vehicle. The longitudinal centre line of the vehicle is indicated at 223. The springs are each mounted to the sub-frame by two elastomeric bush assemblies 224, 225, equally spaced on opposite sides of the centre line 223.

The free ends of the springs are connected together at a wheel carrier member 226 which is also connected, at 227, to a telescopic damper strut 228 having an upper mounting 229 to the sub-frame. As for the embodiments of the invention above described, the path of wheel movement relative to the vehicle is thus determined by the combination of the springs and the damper strut.

The unstressed shapes of the springs 220, 221, 222 are selected so that the centre spring 221 opposes the force exerted by springs 220, 222, for an initial part of upward wheel movement relative to the vehicle, and then during a further part of such movement augments the force exerted by springs 220, 222. A change in suspension rate is thus obtained, the geometry of the springs being selected so that the change occurs at the appropriate point in the path of wheel travel to suit the vehicle in question. The difference in the unstressed shapes of the springs 220, 221, 222 is shown at the ends thereof in broken lines in Figure 5.

In addition to providing the change in spring rate, the presence of the additional spring 221 also assists the other springs in their function of determining the path of wheel travel. Particularly, the additional spring 221 assists the resistance of the suspension to wheel movement longitudinally of the vehicle.

Although as illustrated the spring 221 extends transversely across the whole width of the vehicle between the wheels thereof, separate spring portions may be utilised at each side of the vehicle. Such spring portions could be rigidly secured to the sub-frame at respective mounting points positioned as mountings 224, 225.

## Claims

1. A suspension for a pair of wheels of a vehicle, comprising two leaf springs (12, 13; 110, 111; 220, 222) extending transversely of the vehicle generally parallel to one another and spaced from one another longitudinally of the vehicle, means (14, 15, 16; 112; 224, 225) supporting the springs relative to the vehicle structure at two positions spaced between the ends of the springs, for generally pivotal movement about axes extending transversely of the springs, and a wheel carrier member (20; 114; 226) at each side of the vehicle, connected to adjacent ends of the springs.

2. A suspension according to Claim 1 further characterised in that each wheel carrier member - (20; 114; 226) is further connected to the vehicle structure by a respective generally vertically disposed telescopic damper unit (21, 22; 116; 228).

3. A suspension according to Claim 2 further characterised in that each wheel carrier member is rigidly connected to a part (21) of its respective damper unit, and is connected to the ends of the springs for pivotal movement about an axis or axes extending generally longitudinally of the vehicle.

4. A suspension according to any one of the preceding claims further comprising a sub-frame - (10, 11) connected to the vehicle structure and extending transversely thereof, having mountings (14, 15, 16) for supporting the springs relative to the sub-frame.

5. A suspension according to Claim 4 as appendant to Claim 2 further characterised in that the sub-frame is of generally U-shaped configuration, having upwardly extending portions (11) at each side of the vehicle which provide mountings for said damper units (22).

6. A suspension according to Claim 4 or Claim 5 further characterised in that said sub-frame (10, 11) affords a recess within which the springs are disposed.

7. A suspension according to any one of the preceding claims further comprising at least one resilient element (118) extending generally parallel to the springs (110, 111) and connected on the one hand (120) to the springs between their support positions and on the other hand (119) to the vehicle structure, to resist movement of the springs along their length while permitting bending thereof.

8. A suspension according to any one of the preceding claims further characterised by resilient means arranged to act between the vehicle structure and the springs between their support positions, in the direction in which the springs principally deflect in use.

9. A suspension according to Claim 8 as appendant to Claim 7 further characterised in that said resilient means (121) is constituted by at least one portion of said at least one resilient element.

10. A suspension according to any one of the preceding claims further characterised by a leaf spring portion (211) connected to each wheel carrier member and arranged during an initial part of jounce movement thereof to exert a force opposing that exerted by at least one of said springs (210, 212), and during a further part of said jounce movement to pass through a neutral position and thereafter to exert a force augmenting that exerting by said at least one spring.

11. A suspension according to Claim 10 comprising an additional leaf spring (221) extending transversely of the vehicle and having its opposite end portions constituting said portions connected to the wheel carrier members.

12. A suspension according to any one of the preceding claims further characterised in that the springs are of composite, fibre-reinforced plastics, material.

FIG.1.

FIG.2.

FIG. 3.

FIG. 4.

FIG. 5.

## European Patent Office

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-3 302 627 (VOLKSWAGENWERK AG) * Page 6, line 24 - page 7, line 14; figures 1a-1b * | 1-3 | B 60 G 11/08 B 60 G 15/06 B 60 G 11/34 F 16 F 1/36 |
| Y | | 4 | |
| Y | | 12 | |
| | --- | | |
| Y | US-A-3 913 932 (FORD) * Column 2, lines 1-58; figures 1-4 * | 4 | |
| | --- | | |
| Y | WO-A-8 301 758 (BERTIN) * Abstract; figure 5 * | 12 | |
| | --- | | TECHNICAL FIELDS SEARCHED (Int. Cl.4) |
| A | DE-A-2 528 759 (VOLKSWAGENWERK AG) * Figures 1-2 * | 7 | B 60 G F 16 F |
| | --- | | |
| A | US-A-2 274 227 (C. ZIMMER) * Column 1, line 49 - column 2, line 3; figure 1 * | 7 | |
| | --- | | |
| A | DE-C- 930 311 (KLÖCKNER-HUMBOLDT-DEUTZ AG) * Figures 1-3 * | 1,11 | |
| | ----- | | |

The present search report has been drawn up for all claims

| Place of search | Date of completion of the search | Examiner |
|---|---|---|
| THE HAGUE | 08-01-1987 | LINTZ C.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82